# EUROPEAN PATENT SPECIFICATION

(11) **EP 1 406 846 B1**
(45) Date of publication and mention of the grant of the patent: **28.12.2005**
(21) Application number: 01981205.6
(22) Date of filing: 29.10.2001
(51) Int. Cl.: C03B 33/06, B44C 3/00

(54) **THIN WALLED BLOWN GLASSWARE ORNAMENTS MANUFACTURING PROCEDURE**
VERFAHREN ZUR HERSTELLUNG VON DÜNNWANDIGEN GEBLASENEN DEKORATIVEN GLASGEGENSTÄNDEN
PROCEDE DE FABRICATION D'OBJETS DECORATIFS EN VERRE SOUFFLE A PAROIS FINES

(30) Priority: 18.07.2001 PL 34879601
(43) Date of publication of application: 14.04.2004
(73) Proprietor: Mostowski, Robert, 42-200 Czestochowa (PL)
(72) Inventor: Mostowski, Robert, 42-200 Czestochowa (PL)
(74) Representative: Grünecker, Kinkeldey, Stockmair & Schwanhäusser Anwaltssozietät
(86) International application number: PCT/PL2001/000084
(87) International publication number: WO 2003/008351

(56) References cited:
- BE-A- 690 203
- DE-A- 3 537 434
- DE-B- 1 025 112
- FR-A- 2 081 845
- GB-A- 140 257
- US-A- 4 424 925
- DATABASE WPI Section Ch, Week 198514 Derwent Publications Ltd., London, GB; Class L01, AN 1985-085182 XP002196821 & SU 1 110 758 A (GLASS EQUIP RES DES), 30 August 1984 (1984-08-30)

## Description

The subject of the invention is a method of manufacturing thin-walled blown glass ornaments, comprising blowing molten glass into a raw, thin-walled blown glass shell with a full, closed spatial body with an extraction hole.

The glassware ornaments manufactured until now, for example the Christmas tree ornaments, are produced in form of a three-dimensional closed body and the simplest form is a sphere with a small protrusion and the extraction hole, used usually for suspension wire embedding and hooking the ornament. Other closed three-dimensional bodies blown up of glass heated to the plastic state and fit for the forming are the figures of: a person, a spruce, a ship and other bodies, every time three-dimensional and with a closed surface, which certainly limits the assortment of manufactured glassware ornaments made of thin walled blown glass and their decoration, except the silver plating of the internal surface took place only on their external surface.

The aim of the invention is to develop the method of blown thin walled glassware manufacturing procedure in order to obtain a single layer thin glassware of the open spatial body bowl type, or the open basket and other similar bodies, thereby to obtain a wider assortment of single layer ornaments of open three dimensional bodies blown of thin-walled glass not manufactured until now without diminishing its durability and other utility values.

This is achieved by the method according to claim 1. The advantages of the method according to claim 1 shall be clear from the following. Preferred embodiments of this method are specified in the dependent claims.

Ornaments made of thin-walled single layer blown glass with an open three-dimensional body can be obtained in such manner, that the raw spatial glass shell of a certain shape is blown of a glass pipe heated to plastic state into a spatial mould, representirg the final shape of the required figure whereby the glass will be a bit less clear, but when the shell is blown without a mould, then the shell obtained will be fully clear. Depending on the further operations such glass shell obtained will be tempered and can be covered inside with a metal layer or just left as clear glass for further decoration.

The consecutive steps of blown glass shell preparation can be the shell cutting along one or more determined axes in case of getting two or more symmetrical details utilized in next operations. Another possibility consists in cutting out details when certain surfaces are cut out of the raw glass shell with a closed body obtained in the mould along the determined lines, or by means of a template or only according to the creator's vision, retaining, however, the original shape of the raw figure, for example an open basket. The method involves cutting out and rejecting the useless parts of the raw shell made of the complete, closed body, leaving only part of the raw shell, for example an open form of a sleigh on blades.
The cutting activities are realized by means of such technical methods like mechanical saw, gas blowpipe or laser. The above activities can be applied jointly or alternately for a single shell treatment.
The single layer thin-walled blown ornament with the open body obtained by the above method in a consecutive step can be treated in order to eliminate sharp edges after cutting and to decorate the exposed outer and internal surfaces.
The single layer thin-walled blown glass ornaments with the open body obtained in such manner can be used as the initial details for further connection with other open or closed body elements giving new possibilities of varied artistic combinations.
With the preferred embodiment of the invention light, single layer details can be obtained, for example such elements as the prior art dragonfly wings which, in the prior art, have the shape of a closed bulb with the required curves and thus are relatively heavy details. In contrary, the method of the present invention allows to obtain two or more elements from one full, closed spatial shell, after dividing it along previously determined cutting lines, or by means of a template, which are lighter and provide a better visual image of the final ornament shape, which is made exclusively of a single layer open element or includes such an element in its structure.

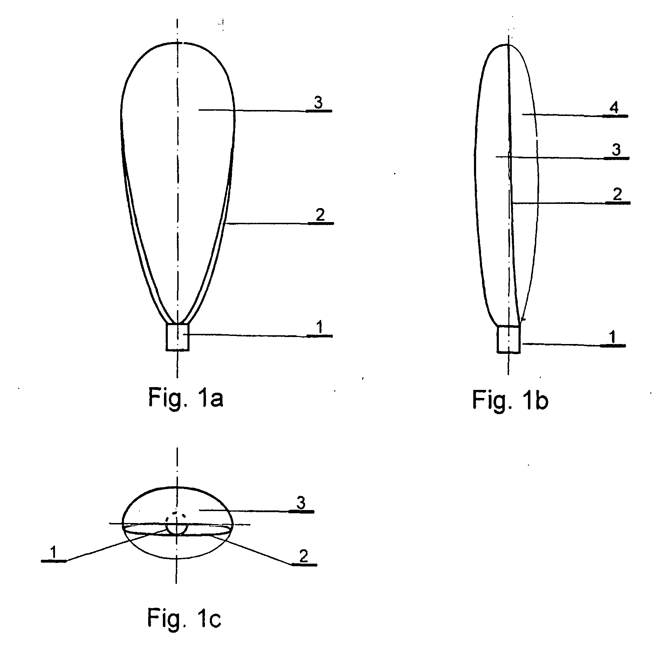

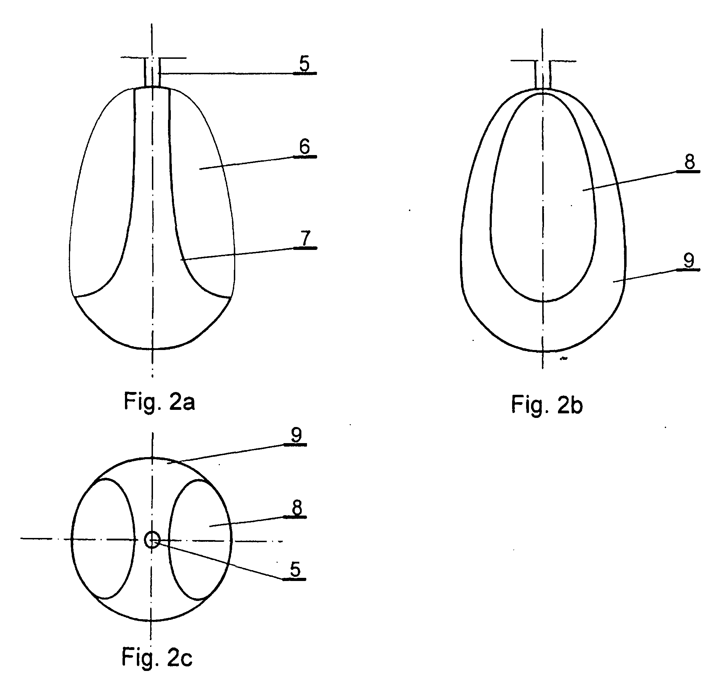

In Fig. 1a to 1c a thin-walled blown glass shell of longitudinal shape is presented schematically in the front view after blowing up and cutting off its part (fig. 1a), in the side view of the whole shell before cutting off (fig.Ib) and the top view after the formation (fig. 1c), which after cutting off along the marked lines forms a single layer open ornament detail; Fig. 2a to 2c present a thin-walled glass shell with the shape similar to the rotational ellipsoid with an extraction hole (fig. 2a), with the symmetrically cut off surfaces on both sides of the body, opening the shell interior
(Fig. 2b) and in the top view the formed shell in the shape of a basket (Fig.2c) with the open interior.

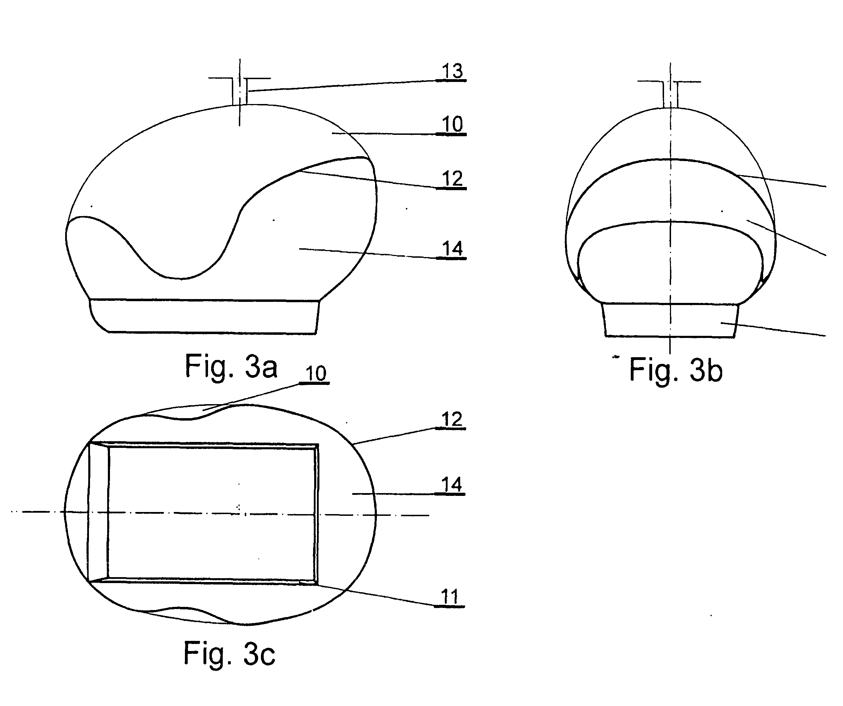

Figures 3a to 3c present a thin-walled glass shell with the shape similar to the elongated rotational ellipsoid somewhat inclined with an extraction hole on top and an additional flat base on the bottom down the longer body axis (Fig. 3a) with the marked line of cutting off the upper surface with the extraction hole (fig. 3b) and the top view of the glass shell (fig.3c) after cutting off the upper shell part and exposing the interior of the figure.
In order to obtain a formed single layer element made of thin-walled blown glass many technical solutions are available, which will be presented in the examples of the execution.

EXAMPLE I. In the execution example as in Fig. 1a to 1c a thin-walled shell of longitudinal shape is shown with an extraction hole 1 and marked cutting edge 2 along which the redundant part of a raw shell wall is separated 4 as result of which the final formed element is obtained 3 making up the dragonfly wing, and the extraction hole 1 left on the wing will be used for attaching the wing to the dragonfly trunk forming a light element of the final ornament.

EXAMPLE II. In the execution example as in Fig. 2a to 2c a raw thin-walled full shell was obtained with the shape similar to the elongated rotational ellipsoid with an extraction hole 5 in the upper part of the raw shell 6 with cutting edges 7 marked on both sides forming symmetrical openings 8 exposing the interior of the raw shell and as result a basket 9 with the open interior was obtained consisting of a single layer of blown thin glass and an extraction tip 5 left is used to fix a wire hook.

EXAMPLE III. In the execution example as in Fig. 3a to 3c a raw thin-walled full glass shell was obtained with the shape similar to the horizontally arranged, somewhat inclined rotational ellipsoid figure 10 with an oblate bottom base surface 11 and an extraction hood 13 in the upper part of the closed spatial body and with a marked curve 12 defining the cutting edge, along which the shell is cut, the upper part removed and thus a figure is obtained in form of a sleigh 14 on blades 11, open from the top, a side view of which is shown in Fig. 3b, whereas Fig. 3c shows the top view of the open body.
Such raw figures obtained from thin-walled blown glass with the open spatial body are later subjected to further treatment in order to remove sharp edges, particularly in case of mechanical cutting and are then decorated on both surfaces of the raw thin glass shell i.e. both the outer surface and the exposed internal surface.
Those simple open spatial body figures can be additionally supplemented with other figures and decorative details, like for example the open basket can be filled with loosely arranged fruits, likewise made of thin-walled blown glass, whereas a figure of a coachmen can be attached to the obtained figure of a sleigh on blades.

## Claims

1. A method of manufacturing thin-walled blown glass ornaments, comprising blowing molten glass into a raw, thin-walled blown glass shell with a full, closed spatial body with an extraction hole, **characterised in that** the raw blown glass shell (6) is divided according to a required pattern (12) by mechanical, flame or laser cutting in order to obtain after the division a single layer, open spatial body, intended for further operations like bonding, decoration or other.

2. The method according to claim 1, **characterised in that** the raw blown glass shell (6) is cut through along marked lines (12) or according to a templet, as a result of which at least two symmetrical single layer elements are obtained.

3. The method according to claim 1, **characterised in that** marked surfaces (8) are cut out of the raw blown glass shell (6) along marked partition lines (7) or according to a templet, resulting in a blown glass shell (9) with openings of desired configuration.

4. The method according to claim 1, **characterised in that** the raw blown glass shell (6) is subjected to a treatment by cutting off certain surfaces according to an established pattern (12) as a result of which only a part of the original shell body remains for further treatment (11, 14).

5. The method according to claim 1, **characterised in that** the raw blown glass shell (5) is subjected to different treatment methods by means of one or more partition techniques, i.e. mechanical cutting, gas blowpipe or laser cutting.

## Patentansprüche

1. Ein Verfahren zum Herstellen dünnwandiger geblasener Glasschmuckstücke, umfassend geblasenen geschmolzenen Glases in einer unbearbeiteten, dünnwandigen geblasenen Glashülle mit einer vollen, geschlossen Raumkörperform mit einem Extraktionsloch, **dadurch gekennzeichnet, dass** die unbearbeitete geblasene Glashülle 6 gemäß eines geforderten Musters 12 durch mechanisches, Flammen- oder Laserschneiden geteilt wird, dergestalt, dass nach dem Teilen ein einlagiger offener Raumkörper erreicht wird, der nutzbar für nachfolgende Operationen, wie z. B. Bonding, Dekoration oder Weiteres ist.

2. Das Verfahren gemäß Anspruch 1, **dadurch gekennzeichnet, dass** die unbearbeitete geblasene Glashülle 6 entlang markierter Linien 12 durchgeschnitten wird oder gemäß einer Schablone geschnitten wird, so dass als Resultat dessen wenigstens zwei symmetrische einlagige Elemente erreichbar sind.

3. Die Methode nach Anspruch 1, **dadurch gekennzeichnet, dass** die markierten Oberflächen 8 aus dem unbearbeiteten geblasenen Glashüllenelement 6 ausgeschnitten werden, und zwar entlang der markierten Partitionslinien 7 oder entlang einer Schablone, wodurch eine geblasene Glashülle 9 mit Öffnungen gewünschter Konfiguration erreicht wird.

4. Die Methode nach Anspruch 1, **dadurch gekennzeichnet, dass** die unbearbeitete geblasene Glashülle 9 nachfolgend behandelt wird, und zwar durch das Abschneiden bestimmter Oberflächen entsprechend eines Musters 12, welches als Resultat nur einen Teil des ursprünglichen Hüllenkörpers übrig lässt, der weiter einer Behandlung unterzogen wird (11, 14).

5. Die Methode nach Anspruch 1, **dadurch gekennzeichnet, dass** die unbearbeitete geblasene Glashülle 6 durch nachfolgende Behandlungen bearbeitet wird, wobei die Behandlungen Trenntechniken subsummiert, insbesondere mechanisches Schneiden, Glasschweißbrennerschneiden oder Laserschneiden.

## Revendications

1. Procédé de fabrication d'objets décoratifs en verre soufflé à paroi mince, comprenant le soufflage d'un verre fondu pour former une coque en verre soufflé brute à paroi mince comportant un corps entier délimitant un espace fermé et comportant un trou d'extraction, **caractérisé en ce que** la coque brute en verre soufflé (6) est divisée selon un modèle requis (12) par découpage mécanique, au chalumeau ou au laser, pour permettre d'obtenir, après division, un corps monocouche délimitant un espace ouvert destiné à subir d'autres opérations telles que collage, décoration ou autre.

2. Procédé selon la revendication 1, **caractérisé en ce que** la coque brute en verre soufflé (6) est découpée le long de lignes marquées (12) ou selon un gabarit, pour permettre d'obtenir au moins deux éléments monocouches symétriques.

3. Procédé selon la revendication 1, **caractérisé en ce que** des surfaces marquées (8) sont découpées dans la coque brute en verre soufflé (6) le long de lignes de séparation marquées (7) ou selon un gabarit, pour former une coque en verre soufflé (9) comportant des ouvertures de configuration souhaitée.

4. Procédé selon la revendication 1, **caractérisé en ce que** la coque brute en verre soufflé (6) est soumise à un traitement par découpage de certaines surfaces selon un modèle établi (12), pour qu'une partie seulement du corps d'origine de la coque subsiste pour un traitement ultérieur (11, 14).

5. Procédé selon la revendication 1, **caractérisé en ce que** la coque brute en verre soufflé (5) est soumise à différents procédés de traitement au moyen d'au moins une technique de séparation, c'est-à-dire un découpage mécanique, au chalumeau à gaz ou au laser.
